# EUROPEAN PATENT SPECIFICATION

(11) **EP 3 047 906 B1**
(45) Date of publication and mention of the grant of the patent: **16.12.2020**
(21) Application number: 14846063.7
(22) Date of filing: 12.09.2014
(51) Int. Cl.: B01J 37/00, B01J 27/053

(54) **METHOD FOR PRODUCING SOLID ACID BY MOLDING WITH A RESIN BINDER**
VERFAHREN ZUR HERSTELLUNG EINER GEFORMTEN FESTEN SÄURE MITTELS EINES KUNSTHARZBINDEMITTELS
PROCÉDÉ DE PRÉPARATION D'UN ACIDE SOLIDE PAR MOULAGE AVEC UNE RÉSINE SYNTHÉTIQUE

(30) Priority: 18.09.2013 JP 2013193275; 08.09.2014 JP 2014182439
(43) Date of publication of application: 27.07.2016
(73) Proprietor: Futamura Kagaku Kabushiki Kaisha, Nagoya-shi, Aichi 450-0002 (JP)
(72) Inventor: YAMADA Hirofumi, Kure-shi Hiroshima 737-0134 (JP)
(74) Representative: TBK
(86) International application number: PCT/JP2014/074269
(87) International publication number: WO 2015/041178

(56) References cited:
- EP-A1- 1 064 996
- EP-A1- 2 865 769
- WO-A1-2008/123530
- WO-A1-2011/087131
- JP-A- 2002 536 787
- JP-A- 2009 067 730
- JP-A- 2011 011 201
- JP-A- 2012 005 384
- JP-A- 2013 144 741
- JP-A- 2014 004 561
- US-A- 5 736 481
- US-A- 5 736 485
- James R. Kastner ET AL: "Catalytic esterification of fatty acids using solid acid catalysts generated from biochar and activated carbon", Catalysis Today, vol. 190, no. 1, 1 August 2012 (2012-08-01), pages 122-132, XP055548270, AMSTERDAM, NL ISSN: 0920-5861, DOI: 10.1016/j.cattod.2012.02.006
- Kiyotaka Nakajima ET AL: "Amorphous Carbon with SO 3 H Groups as a Solid Brønsted Acid Catalyst", ACS Catalysis, vol. 2, no. 7, 25 May 2012 (2012-05-25), pages 1296-1304, XP055548289, US ISSN: 2155-5435, DOI: 10.1021/cs300103k

## Description

### Technical Field

The present invention relates to a method of production of a synthetic resin binder-shaped solid acid, more particularly relates to a method of production of a solid acid obtained by using a synthetic resin binder to form predetermined shapes and introducing sulfo groups (sulfonic acid groups) into those shapes.

### Background Art

Sulfuric acid has a high activity, so is widely used as a catalyst when causing a reaction of a hydrocarbon compound. For example, it is applied to promoting an esterification reaction causing a reaction between a free higher fatty acid and alcohol to obtain a higher fatty acid ester, promoting a hydrolysis reaction from cellulose or another sugar chain to a monosaccharide, promoting an alkylization reaction synthesizing a hydrocarbon fuel, etc.

Sulfuric acid contributes to promotion of various reactions as a catalyst, then is neutralized and flushed away and therefore consumed each time. Sulfuric acid is a liquid, so recovery is not easy. Due to the difference in expenses of recovery and treatment with new introduction, at the present time the acid is mostly used once then disposed of. However, if considering not only the neutralization and flushing of used sulfuric acid and also the wastewater treatment required under environmental standards, the burden of that is great. From this viewpoint, a catalyst has been sought which can withstand continuous use as a catalyst and which is easy to separate and recover after reaction and therefore is more convenient.

As such a catalyst, a solid acid may be mentioned. For example, there are zirconia treated by sulfuric acid and a fluororesin comprised of PTFE into which sulfo groups (sulfonic acid groups) are introduced. In the case of zirconia, the concentration of sulfo groups per unit weight is low, so low catalytic activity is a defect. Further, such a fluororesin is weak against heat, so there is the problem that the reaction species which can be applied are limited.

Therefore, as a solid acid having both sufficient catalytic activity and heat resistance, a carbon-based solid acid has been proposed (see PLT 1 and PLT 2 etc.). For example, in PLTs 1 and 2, the solid acid can be obtained by carbonizing a polycyclic aromatic hydrocarbon in concentrated sulfuric acid.

After that, a method of using the inexpensively available sawdust or other wood as the carbon-based starting material to produce a solid acid was proposed (see PLT 3). The solid acid using the starting material disclosed in PLT 3 has a high catalytic activity. The method is excellent for mass production and the price is also considered promising. However, in the middle of processing, mainly at the stage of sulfonation for introducing sulfo groups, powdering sometimes easily occurred.

To improve the convenience of such an easily powdering solid acid, attempts have been made to form the solid acid into granules and other shapes. For example, there is also the technique of using a resin-based binder to solidify powder solid acid to form pellets. However, a binder itself does not have catalytic activity, so the binder covering the surface of the solid acid ends up causing a large reduction in the inherently provided catalytic activity. Furthermore, due to the nature of a binder, the result is poor in chemical resistance and poor in durability when envisioning continuous industrial use.

Therefore, a new method of production has been sought which deals with the problems of the drop in catalytic activity when using a binder, the deterioration of the binder itself, etc. when obtaining a solid acid shaped using a binder.

### Citation List

### Patent Literature

PLT 1. Japanese Patent No. JP 4041409 B
PLT 2. Japanese Patent No. JP 4582546 B
PLT 3. Japanese Patent Publication No. JP 2011-11201 A1

Further, WO 2008/123530 A1 discloses a solid acid catalyst. EP 1 064 996 A1 discloses activated carbon. US 5736485 A discloses shaped lignocellulosic-based activated carbon. James R. Kastner et Al: "Catalytic esterification of fatty acids using solid acid catalysts generated from biochar and activated carbon", Catalysis Today, vol. 190, no. 1, 1 August 2012 (2012-08-01), pages 122-132, discloses the preparation of shaped solid catalysts by direct sulfonation previously shaped carbon materials.

### Summary of Invention

### Technical Problem

Based on such history, the inventor engaged in intensive studies on a processing method using wood starting materials to keep the prime manufacturing costs low and using a binder of a synthetic resin to enable shaping. Further, they pursued a method of production for inexpensively and simply obtaining shapes of a solid acid without causing a drop in catalytic activity even with shaping using a binder of a synthetic resin.

The present invention was made in consideration of the above situation and provides a shaped solid acid which uses a wood starting material to keep down the prime costs, carbonizes a synthetic resin binder itself together with the wood starting material to avoid deterioration of the catalyst performance due to coverage by the binder, and thereby realizes a high degree of freedom of design of shape and further a suitable hardness and provides a method of production of the same.

### Solution to Problem

That is, the aspect of the invention of claim 1 relates to a method of production of a synthetic resin binder-shaped solid acid comprising a starting material kneading step of kneading a wood starting material powder and synthetic resin binder to obtain a wood starting material mixture, a molding step of molding the wood starting material mixture into predetermined shapes to obtain starting material shapes, a carbonization step of carbonizing the starting material shapes in an inert atmosphere to obtain carbonized shapes, and a sulfonating step of introducing sulfo groups into the carbonized shapes to obtain a shaped solid acid, wherein the synthetic binder resin is a thermoplastic resin or a thermosetting resin.

The aspect of the invention of claim 2 relates to the method of production of a synthetic resin binder-shaped solid acid according to claim 1 wherein the synthetic resin binder is a thermoplastic resin.

The aspect of the invention of claim 3 relates to the method of production of a synthetic resin binder-shaped solid acid according to claim 2 wherein the thermoplastic resin is selected from a polyethylene resin, polypropylene resin, polyethylene terephthalate resin, polycarbonate resin, polyvinyl chloride resin, acrylonitrile-butadiene-styrene resin, polyimide resin, or polyurethane resin.

The aspect of the invention of claim 4 relates to the method of production of a synthetic resin binder-shaped solid acid according to claim 1 wherein the synthetic resin binder is a thermosetting resin.

The aspect of the invention of claim 5 relates to the method of production of a synthetic resin binder-shaped solid acid according to claim 4 wherein the thermosetting resin is selected from a phenol resin, urea resin, melamine resin, epoxy resin, silicone resin, polyimide resin, diallyl phthalate resin, or polyurethane resin.

The aspect of the invention of claim 6 relates to the method of production of a synthetic resin binder-shaped solid acid according to claim 1 wherein the synthetic resin binder is a powder form or liquid form.

The aspect of the invention of claim 7 relates to the method of production of a synthetic resin binder-shaped solid acid according to claim 1 wherein the synthetic resin binder is a dispersion form.

The aspect of the invention of claim 8 relates to the method of production of a synthetic resin binder-shaped solid acid according to claim 1 wherein a weight ratio of the wood starting material powder in the wood starting material mixture is a maximum 99 wt%.

The aspect of the invention of claim 9 relates to the method of production of a synthetic resin binder-shaped solid acid according to claim 1 wherein the amount of the sulfo groups in the shaped solid acid is 0.5 mmol/g or more.

The method of production of a synthetic resin binder-shaped solid acid of the aspect of the invention of claim 1 provides a synthetic resin binder-shaped solid acid.

### Advantageous Effects of Invention

According to the method of production of a synthetic resin binder-shaped solid acid of the aspect of the invention of claim 1, there are provided a starting material kneading step of kneading a wood starting material powder and synthetic resin binder to obtain a wood starting material mixture, a molding step of molding the wood starting material mixture into predetermined shapes to obtain starting material shapes, a carbonization step of carbonizing the starting material shapes in an inert atmosphere to obtain carbonized shapes, and a sulfonating step of introducing sulfo groups into the carbonized shapes to obtain a shaped solid acid, so it is possible to use a wood starting material to keep down the prime costs and carbonize the synthetic resin binder itself together with the wood starting material to avoid deterioration of the catalyst performance due to coverage by the binder. Further, it is possible to establish a method of production of a shaped solid acid which realizes a high degree of freedom of design of shape and further has a suitable hardness.

According to the method of production of a synthetic resin binder-shaped solid acid of the aspect of the invention of claim 2, there is provided the aspect of the invention of claim 1 where the synthetic resin binder is a thermoplastic resin, so the synthetic resin binder easily melts and becomes fluid due to the heating at the time of carbonization and easily binds with the wood starting material powder. Further, the carbonized shapes as a whole form solid masses after molding and then are sulfonated, so rise in hardness.

According to the method of production of a synthetic resin binder-shaped solid acid of the aspect of the invention of claim 3, there is provided the aspect of the invention of claim 2 where the thermoplastic resin is selected from a polyethylene resin, polypropylene resin, polyethylene terephthalate resin, polycarbonate resin, polyvinyl chloride resin, acrylonitrile-butadiene-styrene resin, polyimide resin, or polyurethane resin, so the thermoplastic resin easily melts and becomes fluid due to the heating at the time of carbonization and easily binds with the wood starting material powder. Further, the carbonized shapes proceed to be sulfonated without the binder being completely dissolved by the sulfonating agent, so rise in hardness. Furthermore, a thermoplastic resin is relatively inexpensive and readily available.

According to the method of production of a synthetic resin binder-shaped solid acid of the aspect of the invention of claim 4, there is provided the aspect of the invention of claim 1 where the synthetic resin binder is a thermosetting resin, so the thermosetting resin easily cures at the time of carbonization to bind with the wood starting material powder and form solid masses overall which are sulfonated, so rise in hardness.

According to the method of production of a synthetic resin binder-shaped solid acid of the aspect of the invention of claim 5, there is provided the aspect of the invention of claim 4 where the thermosetting resin is selected from a phenol resin, urea resin, melamine resin, epoxy resin, silicone resin, polyimide resin, diallyl phthalate resin, or polyurethane resin, so the binder easily cures at the time of carbonization and binds with the wood starting material powder to form solid masses. Further, the carbonized shapes proceed to be sulfonated without the binder being completely dissolved by the sulfonating agent, so rise in hardness. In addition, these thermosetting resins are generally readily available.

According to the method of production of a synthetic resin binder-shaped solid acid of the aspect of the invention of claim 6, there is provided the aspect of the invention of claim 1 where the synthetic resin binder is a powder form or a liquid form, so easily is uniformly mixed with the wood starting material powder.

According to the method of production of a synthetic resin binder-shaped solid acid of the aspect of the invention of claim 7, there is provided the aspect of the invention of claim 1 where the synthetic resin binder is a dispersion form, so the solvent has good affinity with the wood starting material powder. It is possible to knead it well with the wood starting material powder and quickly obtain a wood starting material mixture.

According to the method of production of a synthetic resin binder-shaped solid acid of the aspect of the invention of claim 8, there is provided the aspect of the invention of claim 1 where the weight ratio of the wood starting material powder in the wood starting material mixture is a maximum 99 wt%, so it is possible to raise the ratio of the wood starting material powder in the synthetic resin binder-shaped solid acid to the maximum extent.

According to the method of production of a synthetic resin binder-shaped solid acid of the aspect of the invention of claim 9, there is provided the aspect of the invention of claim 1 where the amount of sulfo groups in the shaped solid acid is 0.5 mmol/g or more, so good catalytic activity is exhibited.

When the solid acid is produced by the method of production according to claim 1, so a wood starting material can be used to keep down the prime costs. Further, the deterioration of catalyst performance due to later coverage by the binder like in the past can be avoided and further a binder-shaped solid acid with a high degree of freedom of design of shape can be obtained.

### Brief Description of the Drawings

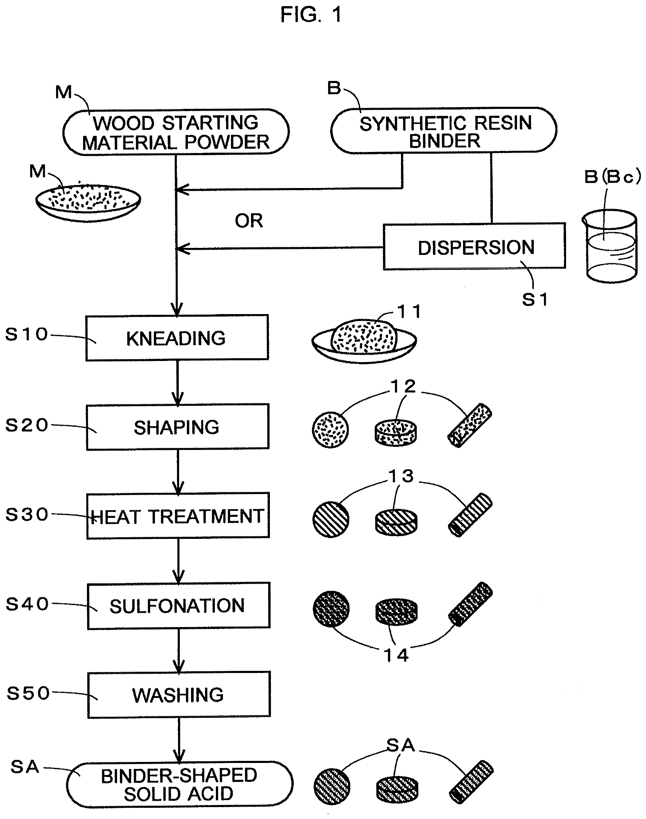

FIG. 1 is a schematic process diagram relating to the method of production of a synthetic resin binder-shaped solid acid of the present invention.

### Description of Embodiments

The method of production of a synthetic resin binder-shaped solid acid prescribed in the present invention will be explained in sequence together with the schematic process diagram of FIG. 1. The main starting materials of the synthetic resin binder-shaped solid acid of the present invention are a wood starting material powder forming the body of the carbon-based solid acid and a synthetic resin binder giving form to the same. Both starting materials are hydrocarbon compounds, so the chemical properties of the two are relatively close and form overall the structure of a carbon-based solid acid.

The wood starting material powder M is sawdust (or shavings etc.) produced when cutting and processing wood or pulverized waste timber or timber from thinning operations, waste bamboo, cleared bamboo, palm shells, and other woody plant starting materials rich in cellulose. It is pulverized into a size of 1 mm or less, preferably 0.5 mm or less, more preferably 0.1 mm or less. Wood starting material powder is generally used as a fuel or is incinerated for disposal as a waste product. Up until now, it has not been especially efficiently utilized. Therefore, by processing the wood starting material powder into a base material for a solid acid, it becomes possible to keep down the prime costs and make effective use of a resource.

The wood starting material powder forming the starting material is sieved etc. to make the size of the pulverized particles uniform from the viewpoint of kneading and the stability of finished quality. Further, to reduce the error in the weight ratio of the formulation, the wood starting material powder is dried in advance. Further, it is checked in advance to see if there are any stones or pieces of metal or other foreign matter mixed in.

The wood starting material powder M and the synthetic resin binder B are weighed in predetermined amounts and the two are sufficiently kneaded to obtain the wood starting material mixture 11 (S10). The wood starting material powder M and the synthetic resin binder B are kneaded by a known kneader or blender or other kneading machine.

The synthetic resin binder used here is a generally known synthetic resin. It is selected from thermoplastic resins. As thermoplastic resins, a polyethylene resin, polypropylene resin, polyethylene terephthalate (PET) resin, polycarbonate resin, polyvinyl chloride resin, acrylonitrile-butadiene-styrene resin (ABS resin), polyimide resin, polyurethane resin, or other resin is suitable. This is because it easily melts and becomes fluid by the heating at the later explained carbonization and easily binds with the wood starting material powder. Further, a thermoplastic resin is relatively inexpensive and readily available.

Further, the synthetic resin binder is selected from thermosetting resins. As thermosetting resins, a phenol resin, urea resin, melamine resin, epoxy resin, silicone resin, polyimide resin, diallyl phthalate resin, polyurethane resin, or other resin is suitable. These resins also easily cure by the heating at the time of the later explained carbonization and bind the wood starting material powder. Further, the wood starting material mixture as a whole is sulfonated after being shaped to form solid masses, so rises in hardness. In addition, these thermosetting resins are selected as generally readily available resins.

The synthetic resin binder of the above-mentioned thermoplastic resin or thermosetting resin is mainly based on the findings in the later explained examples. Of course, if hardness by good binding and catalytic activity can be exhibited, other thermoplastic resins or thermosetting resins can also be used. Even with the same type of resin, there are also resins which fall under both thermoplastic resins and thermosetting resins due to differences in composition, methods of formation, etc.

When kneading the wood starting material powder M and the synthetic resin binder B, a powder form (including granular) synthetic resin is used as the synthetic resin binder. By making it a powder form, uniform mixing with the wood starting material powder becomes possible. The particle size of the synthetic resin powder is a suitable one from the ratio of formulation etc., but generally preferably is the same size as the wood starting material powder or smaller than that. The "powder form" referred to here also includes granular and other pulverized matter pulverized to facilitate uniform mixing of the synthetic resin binder. Note that, both the wood starting material powder and the synthetic resin powder which forms the synthetic resin binder have little binding ability. Therefore, a small amount of water or binder etc. is suitably added at the time of kneading to obtain solid masses of the wood starting material mixture.

Furthermore, a liquid synthetic resin is used as the synthetic resin binder. In particular, in the case of a thermosetting resin etc., there are also types which are liquid from the start in the state of storage at ordinary temperature. This being so, a suitable amount is measured out as a liquid and mixed uniformly with the wood starting material powder. In this case as well, this is uniformly dispersed in the wood starting material powder and acts advantageously to bind the wood starting material.

Alternatively, it is possible to use a synthetic resin binder in the form of a dispersion (in the figure, see S1). The dispersion form synthetic resin binder B is a colloidal solution Bc of microparticles of resin dispersed in water or another liquid. That solution Bc includes not only dispersions but also suspensions. Moisture is included in a binder from the start, so this is kneaded well with the wood starting material powder and quickly gives the wood starting material mixture.

Therefore, the respective amounts of the wood starting material powder M and synthetic resin binder B in the wood starting material mixture 11 as a whole are determined considering the performance of the kneading machine, the subsequent processing ability, the hardness, etc. If using a dispersion form synthetic resin binder, the amount is converted by the concentration in the liquid.

In the wood starting material mixture 11 formed by kneading the wood starting material powder M and the synthetic resin binder B, the weight ratio of the wood starting material powder M in the total weight of the wood starting material mixture 11 can be raised to a maximum of 99 wt%. As disclosed by the later explained examples, even if the ratio is raised up to 99 wt%, fabrication is possible. The lower limit of the weight ratio of the wood starting material powder M is not particularly restricted. However, effective use of the wood starting material is the objective, so a composition increasing the weight ratio of the wood starting material powder is preferable. The amount of the synthetic resin binder is adjusted considering the size, shape, lifetime, usage conditions, etc. of that shaped solid acid.

In the wood starting material mixture 11, the reason for using the weight ratio of the wood starting material powder M as a reference is so as to enable an easy grasp of the ratio of formulation of the starting materials. The synthetic resin binder side is sometimes liquid and has to be separately converted. As opposed to this, the amount of the wood starting material powder itself does not change from the start. Therefore, it is convenient to use this as a reference for defining the composition in the wood starting material mixture. Further, this is because it is possible to obtain a direct grasp of the substantive weight ratio of the wood starting material powder. The step of obtaining the wood starting material mixture 11 of S10 corresponds to the "starting material kneading step".

The wood starting material mixture 11 is formed into predetermined shapes to obtain the starting material shapes 12 (S20). The shapes at the time of molding may be spherical shapes (ball shapes), tablet shapes (disc shapes), pellet shapes (cylindrical shapes), or other shapes. The invention is not limited to any special shape. The illustrated starting material shapes 12 show spherical shapes, tablet shapes, and pellet shapes. The method of molding from the wood starting material mixture 11 is also suitably determined in accordance with the shapes. With spherical shapes, the method is spheroidizing using a granulating machine, with tablet shapes, a tableting machine is used, while with pellet shapes, a pelletizer etc. is used. The step of obtaining the starting material shapes 12 of S20 corresponds to the "molding step".

The starting material shaped article 12 is later carbonized and sulfonated, so if much too large, shape retention is not easy. In the later explained examples, the starting material shapes 12 were made diameter 2 mm or 4 mm pellet shapes (lengths about 10 mm). By doing this, compared with powder form solid acid, separation, recovery, etc. from the reaction phase become more convenient. Further, the excess moisture contained in the starting material shapes 12 evaporates and is removed by drying by a dryer etc. The wood starting material powder easily absorbs moisture, so is fully dried. At the next carbonization, if the starting material shapes contains residual moisture, the rise in volume of the moisture is liable to lead to the starting material shapes fracturing etc. and make shape retention at the time of molding difficult. The starting material shapes 12 are not particularly limited in size. They are prepared to a size of a powder or more considering the type of the synthetic resin, ratio of formulation, application, reaction equipment, ease of handling, etc.

The starting material shapes 12 are carbonized in an inert atmosphere whereupon the starting material shapes becomes the carbonized shapes 13 (S30). A carbonization temperature of 270 to 450°C is considered to be an appropriate temperature range. If the carbonization temperature is below 270°C, the wood starting material powder M does not sufficiently carbonize and stable quality cannot be obtained. Conversely, if the carbonization temperature exceeds 450°C, at the time of carbonization, graphene sheet-like structures increase and the number of surface functional groups to be substituted etc. at the time of the next explained introduction of sulfo groups decreases. That is, it becomes difficult to introduce sulfo groups. Therefore, the more preferable carbonization temperature is 290 to 420°C, further 300 to 400°C in range. The step of obtaining the carbonized shapes 13 of S30 corresponds to the "carbonization step". In the examples, the carbonization temperature was made 350°C to 400°C.

Next, the carbonized shapes 13 are sulfonated to introduce sulfo groups (also called sulfonic acid groups) (S40). Sulfo groups (sulfonic acid groups) are acidic functional groups expressed as "-SO₂(OH)". Due to the sulfonation, the carbonized shapes 13 become the shaped solid acid 14. The sulfo groups are introduced by reaction of concentrated sulfuric acid, fuming sulfuric acid, chlorosulfonic acid, or another sulfonating agent with the carbonized shapes 13. The type of the sulfonating agent used in that sulfonating step is not particularly limited (see later examples). The step of obtaining the shaped solid acid 14 of S40 corresponds to the "sulfonating step".

The shaped solid acid 14 is washed clean of the excess sulfonating agent component by being run through a washing step using hot water etc. (S50). Further, the moisture at the time of washing is suitably dried off. Here, it is possible to use a sieve to obtain a product of a predetermined size. Further, the powdery matter produced due to breakage during production is removed. By doing through the above series of steps, a "synthetic resin binder-shaped solid acid SA" can be obtained.

The level of the amount of sulfo groups per unit weight present in the shaped solid acid 14 obtained by the illustrated example of production can become an indicator of the level of the catalytic activity. For this reason, this is emphasized in evaluating the performance of the shaped solid acid 14. Therefore, the amount of sulfo groups present on the shaped solid acid 14 is at least 0.5 mmol/g or more, preferably 0.7 mmol/g or more, more preferably 1.5 mmol/g or more. The amount of sulfo groups is calculated by elemental analysis from the amount of the sulfur.

As clear from the later explained examples, if the amount of sulfo groups of the shaped solid acid is less than 0.5 mmol/g, the catalytic reactivity is relatively poor. If considering the reactivity, a greater amount of sulfo groups is preferable. However, there are also restrictions due to factors such as the graphene sheet-like structures or surface functional groups, so the upper limit of the amount of sulfo groups is considered to be restricted to about 5.0 mmol/g. Accordingly, as explained above, a range of the amount of sulfo groups per unit weight can be derived.

The shaped solid acid produced by the method of production illustrated and explained in detail up to here has relative freedom in the ratio of content of the wood starting material powder and design of the shapes. Therefore, it can be produced corresponding to the desired application and objective. In particular, by the solid acid becoming a shapes of a predetermined form, separation and recovery after use for the catalytic reaction become easy and the convenience at the time of use is greatly improved.

The present invention features making the binder contained in the shaped solid acid a synthetic resin and finally carbonizing the binder together with the wood starting material powder. Due to the carbonization, binding of the starting material with itself is promoted. While self-evident, the binder used for preparing the shaped solid acid by the method of the present invention does not by nature finally bind together the powder solid acid. From this, the problem of the drop in catalytic activity due to coverage by the binder is effectively resolved.

Therefore, first, the difficulty of the solid acid obtained by sulfonation using only a wood starting material powder as a starting material being a powder form is eliminated. Further, the obtained solid acid can achieve both shapeability and maintenance of catalytic activity. Further, over half of the weight of the shaped solid acid is accounted for by the wood starting material powder, so the cost of the starting materials etc. can be greatly reduced. For this reason, the granular solid acid prepared by the method of of the present invention reduces the difficulty of handling of the conventional powder solid acid, can be produced more inexpensively, and can exhibit sufficient catalytic activity.

Furthermore, as explained in the method of production of a synthetic resin binder-shaped solid acid of the present invention, the synthetic resin binder and the wood starting material powder are kneaded together and shaped and carbonized as a single mass. From this, even the initially fine wood starting material powder is converted to shapes accompanied with a predetermined size midway. Further, it is carbonized and sulfonated substantially as such shapes. According to this method of production, both shape retention and hardness as a shaped solid acid are provided (see later explained examples). Therefore, if envisioning operation in an actual reaction treatment facility, since the shaped solid acid is improved in durability, the convenience in charging into the reaction system and recovery from the same etc. is greatly improved. Examples

### Starting Materials Used

Synthetic Resin (Thermoplastic Resin) Binders (B1 to B12) of Examples As the aqueous dispersion of polyethylene, Mitsui Chemical's Aqueous Dispersion (low density polyethylene (LDPE), product name "Chemipearl M200") was used (binder B1).
As the powder of polyethylene, Sumitomo Chemical's low density polyethylene (LDPE), product name "Sumikathene G801" was used (binder B2). As the powder of polyethylene, Prime Polymer's high density polyethylene (HDPE), product name "Hi-Zex 1608J" was used (binder B3).
As the powder of polyethylene, Prime Polymer's linear medium density polyethylene (LMDPE), product name "Neo-Zex 45200" was used (binder B4). As the powder of polyethylene, Prime Polymer's linear low density polyethylene (LLDPE), product name "Ultzex 20200J" was used (binder B5). As the powder of polypropylene (PP), Prime Polymer's product name "Prime Polypro J709QG" was used (binder B6).
As the powder of polyvinyl chloride (PVC), Shin-Etsu Chemical's product name "Straight Polymer TK2500PE" was used (binder B7).
As the powder of acrylonitrile-butadiene-styrene copolymer resin (ABS), Nippon A&L's product name "Kralastic GA-101" was used (binder B8).
As the powder of polycarbonate (PC), Sumika Styron Polycarbonate's product name "301-40" was used (binder B9).
As the powder of polyethylene terephthalate (PET), Bell Polyester Products' product name "FLX92" was used (binder B10).
As the powder of polyethylene, Mitsui Chemicals' ultrahigh molecular weight polyethylene (UHMWPE), product name "Mipelon XM200" was used (binder B11).
As the powder of polyimide resin (PI), Mitsui Chemicals' product name "AURAM PL450C" was used (binder B12).

Synthetic Resin (Thermosetting Resin) Binders of Examples (B13 to B23)
As the powder of phenol resin, DIC's resol-type (PHR), product name "Phenolite TD-2040C" was used (binder B13).
As the powder of phenol resin, DIC's novolac-type (PHN), product name "Phenolite 3337A", was used (binder B14).
As the liquid of phenol resin, DIC's resol-type (PHR), product name "Phenolite J-325" was used (binder B15).
As the powder of urea resin (UF), Daiwa's product name "Leadlite W32LC" was used (binder B16).
As the powder of melamine resin (MR), Daiwa's product name "Leadlite W5233LC" was used (binder B17).
As the liquid of epoxy resin (ER), DIC's product name "EPICLON EXA-4850" was used (binder B18).
As the powder of polyurethane resin (UR), Nippon Polyurethane Industry, product name "Pearlthanes U-204A" was used (binder B19).
As the powder of silicone resin (SR), Shin-Etsu Chemical's product name "KR-220L" was used (binder B20).
As the liquid of polyurethane resin (UR), DIC's product name "Pandex 305E" was used (binder B21).
As the liquid of polyimide (PI), Kyocera Chemical's product name "Imidalloy KIR-30" was used (binder B22).
As the powder of diallyl phthalate (DAP), Daiso's product name "Daiso Iso-Dap" was used (binder B23).

Binders of Comparative Examples (B31 to B33)
For the viscose, an aqueous solution of viscose (sodium cellulose xanthate) prepared by adding sodium hydroxide and carbon disulfide to pulp by an ordinary method was prepared. This viscose aqueous solution was a composition of a cellulose content: 8.3 to 9.3 wt%, total alkali content: 5.6 to 6.6 wt%, and moisture content: 84.1 to 86.1 wt%. For adjusting the concentration, a 6% sodium hydroxide aqueous solution was used. This was made the binder (B31).
As the methyl cellulose (MC), one made by Shin-Etsu Chemical was used (binder B32).
As the carboxymethyl cellulose (CMC), one made by Nippon Paper Chemical was used (binder B33).
The indications in parentheses after the names of the substances correspond to the abbreviations in the tables.

The wood starting material powder used was sawdust of Douglas fir. That sawdust was pulverized by a pulverizer and sieved to obtain powder of a particle size of about 0.1 mm.
As the sulfonating agent, fuming sulfuric acid, concentrated sulfuric acid (98% sulfuric acid), and chlorosulfonic acid (all made by Wako Pure Chemical Industries) were used.

### Preparation of Shaped Solid Acid

The solid acids of the examples, comparative examples, and control example disclosed in Table 1 to Table 10 were prepared in accordance with the following procedures for use for measurement. The shaped solid acids of Examples 1 to 41 were prepared using the binders B1 to B23 based on the ratios of weight of Table 1 to Table 9. Further, the shaped solid acids of Comparative Examples 1 to 7 were also prepared in the same way. Comparative Example 8 was prepared by later adding a binder. Note that, the control example was a non-shaped solid acid. Further, the shaped solid acids which were prepared were measured and evaluated for weight ratio (%) of the wood starting material powder and binder, hardness (N), sulfur content (wt%) of the refined solid acid catalyst, sulfo group amount (mmol/g), and two types of catalytic performance.

### Kneading of Starting Materials

To pulverized sawdust: 300 g, the different binders were kneaded in weight ratios increased from 3 g to 120 g as in the examples to obtain the wood starting material mixtures. The binder B1 of the aqueous dispersion of polyethylene and the binder B15 of the liquid phenol resin were converted to solid content to set the mixed amounts. For other powder form or granule form binders, to increase the binding ability of the different ingredients, a suitable amount of water was added while kneading.

For the binders of viscose (Comparative Example 1), methyl cellulose (Comparative Examples 2, 4, and 6), and carboxymethyl cellulose (Comparative Examples 3, 5, and 7), to the same pulverized sawdust: 300 g as used in the examples, the different binders were kneaded as in the examples in weight ratios increased from 24 g to 150 g to obtain the wood starting material mixtures. In each case, the amounts were based on converted solid content.

### Molding

The wood starting material mixtures corresponding to the examples and comparative examples were suitably granulated to form diameter 2 mm x length 10 mm or diameter 4 mm x length 10 mm cylindrical pellet shaped starting material shapes. The wood starting material mixtures of the examples and comparative examples were dried since if containing excess moisture, they will easily fracture. Note that, the control example does not have a binder, so this molding step was omitted.

### Comparative Examples 1 to 7

For Comparative Example 1, the viscose was dipped in a coagulating solution of dilute acid to convert it to regenerated cellulose. The wood starting material mixture impregnated with the viscose was shaped into the above-mentioned cylindrical pellet form starting material shapes. This starting material shapes were placed into the above-mentioned coagulating solution to cause the viscose to coagulate and convert it to cellulose. After that, the starting material shapes were recovered from the coagulating solution. Next, the starting material shapes were dipped in a desulfurization solution comprised of a mixed aqueous solution of sodium sulfide and sodium hydroxide, stirred, recovered, and then rinsed repeatedly. After the final rinsing, the shapes were transferred to a thermostatic tank adjusted to 100°C and dried until the temperature no longer changed.

For starting material shapes using the binder B32 of methyl cellulose (Comparative Examples 2, 4, and 6) and the binder B33 of carboxymethyl cellulose (Comparative Examples 3, 5, and 7), since the binder methyl cellulose or carboxymethyl cellulose is normally a powder, first, this was suspended or dispersed in water to obtain a gel. The wood starting material mixture impregnated with the binder was shaped into the above-mentioned cylindrical pellet form starting material shapes and suitably dried.

### Carbonization

Starting material shapes of the examples and comparative examples were placed on metal plates and heated using a muffle furnace while maintaining an inert atmosphere state by nitrogen gas to raise the temperature to the carbonization temperature of Table 1 to 10 (350°C or 400°C heating temperature). That temperature was held for 1 hour. After the heating was finished, the shapes were cooled, then taken out from the muffle furnace to obtain carbonized shapes.

### Sulfonation

Carbonized shapes of the examples and comparative examples were respectively weighed to 10 g and placed in 500 ml three-neck flasks. To each of these, 11.3% fuming sulfuric acid: 100 ml was added. The shapes were stirred while maintaining an 80°C reaction temperature. After that, they were repeatedly washed by distilled water. The washing was repeated until the sulfuric acid ions in the distilled water after washing became the detection limit or less. The shapes were dried to obtain the shaped solid acid.

For Examples 37 and 38, each of the carbonized shapes: 10 g was weighed and placed in a 500 ml three-neck flask. To this, 98% sulfuric acid (concentrated sulfuric acid): 100 ml was added. The shapes were stirred while maintaining an 80°C reaction temperature. After that, they were repeatedly washed by distilled water. The washing was repeated until the sulfuric acid ions in the distilled water after washing became the detection limit or less. The shapes were dried to obtain the shaped solid acid.

For each of Examples 39, 40, and 41, the carbonized shapes: 10 g were weighed and inserted into a 500 ml three-neck flask. To this, 97% chlorosulfonic acid: 100 ml was added. The shapes were stirred while maintaining an 80°C reaction temperature. After that, the shapes were repeatedly washed by distilled water. The washing was repeated until the sulfuric acid ions in the distilled water after washing became the detection limit or less, then the shapes were dried to obtain the shaped solid acid.

### Control Example

A solid acid of only the wood starting material powder (control example) was obtained by placing the above-mentioned sawdust into a crucible, using a muffle furnace and maintaining an inert atmosphere state by nitrogen gas, raising the temperature to the carbonization temperature of Table 9 (350°C), and that holding that temperature for 1 hour to obtain a carbonized material. That carbonized material was sulfonated in the same way as the solid acid of the examples to obtain the solid acid (powder form) of the control example.

### Comparative Example 8

Comparative Example 8 is a shaped solid acid formed by later binding a powder-like solid acid by a synthetic resin binder. To a known powder-like solid acid: 300 g, a synthetic resin binder B1: 30 g was added then the mixture was kneaded together with a suitable amount of water. Next, the mixture was shaped into the aforementioned cylindrical pellets and dried.

### Measurement of Physical Properties

### Weight Ratio of Wood Starting Material Powder

The weight ratio R (wt%) of the wood starting material powder in the wood starting material mixture was calculated from the weights of the wood starting material powder M and the synthetic resin binder or other binder B as R (wt%)={M/(M+B)}x100.

### Hardness

The shaped solid acids of the examples and comparative examples were measured for hardness using a grain rigidity tester (made by Fujiwara Scientific) and pressing rod (diameter 5 mm). Each of the examples and comparative examples was measured 20 times and the average value used as the hardness (N) of the shaped solid acid of that example and comparative example. Note that, the control example was not a shaped material, so the measurement of hardness was omitted.

Measurement of Sulfur Content and Sulfo Group Amount First, the shaped solid acids of the examples etc. were heated to 100°C to dry. The compositions of elements included in the respective shaped solid acids were analyzed by an automatic combustion ion chromatograph: DIONEX ICS-1000, combustion device: Mitsubishi Chemical Analytech's AQF-100, absorption device: Mitsubishi Chemical Analytech's GA-100, and water supply unit: Mitsubishi Chemical Analytech's WS-100 (combustion temperature 1000°C). The obtained sulfur content (mmol/g) was deemed equivalent to the sulfo groups, and the amount of sulfo groups (sulfonic acid groups) in the solid acid per unit weight (mmol/g) was found.

### Measurement of Catalytic Activity

### Measurement of Hydrolysis Reaction

First, the solid acids of the examples, comparative examples, and control example were heated to 100°C to dry them. In a sample flask, each solid acid: 0.1 g was taken. To this, cellobiose: 0.12 g and water: 0.7 ml were added and a reaction caused for 60 minutes while maintaining the 90°C temperature. After the reaction, the result was cooled and water: 2.3 ml was added then a syringe filter was used for filtering. A high pressure liquid chromatograph (HPLC) (made by Shimadzu, RID-10A) and column (made by BIO-RAD, product name: Aminax HPX-87H Column) were used. The filtrate was measured by that HPLC. From the peak area ratio of the glucose and other monosaccharides, the amount of saccharides produced by decomposition from cellobiose was found. Further, this was converted to the amount of production (µmol) by 1 hour reaction per 1 g solid acid (µmol·g⁻¹·h⁻¹).

### Measurement of Esterification Reaction

First, the solid acids of the examples, comparative examples, and control example were heated to 100°C to dry them. A 0.2 g amount of each solid acid was taken in a flask and vacuum dried at 150°C for 1 hour 1 (0.4 Pa or less). After vacuum drying, the solid acid was given ethanol: 58.5 ml (1.0 mol) and acetic acid: 5.742 ml (0.1 mol) and was caused to react for 60 minutes while holding the temperature at 70°C. After the reaction, the result was cooled and filtered by a syringe filter. The amount of production of ethyl acetate contained in the filtrate was measured by a gas chromatograph (GC) (made by Shimadzu Corporation, GC-2014 FID-gas chromatograph) and column (made by Agilent Technology, J&W GC column DB-WAX capillary column). Further, this was converted to the amount of production (mmol) by 1 minute reaction per 1 g solid acid (mmol·g⁻¹·min⁻¹).

**Table 1**

| | Sample no. | Example 1 | Example 2 | Example 3 | Example 4 | Example 5 |
|---|---|---|---|---|---|---|
| Starting materials | Wood starting material powder amount (g) | 300 | 300 | 300 | 300 | 300 |
| | Binder type | B1 LDPE | B1 LDPE | B1 LDPE | B1 LDPE | B1 LDPE |
| | Binder form | Suspension | Suspension | Suspension | Suspension | Suspension |
| | Binder amount (g) | 15 | 30 | 120 | 30 | 120 |
| | Weight ratio in wood starting material (wt%) | 95.2 | 91.0 | 71.4 | 91.0 | 71.4 |
| | Pellet size (mm) | 2.0 | 2.0 | 2.0 | 2.0 | 2.0 |
| Carbonization conditions | Firing temperature (°C) | 400 | 400 | 400 | 350 | 350 |
| | Firing time (h) | 1 | 1 | 1 | 1 | 1 |
| Carbide | Hardness (N) | 13.5 | 19.5 | 12.1 | 46.1 | 36.6 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 5.5 | 5.3 | 6.7 | 7.3 | 7.7 |
| | Sulfo group amount (mmol/g) | 1.7 | 1.7 | 2.1 | 2.3 | 2.4 |
| Catalyst evaluation | Hydrolysis reaction speed (µmol·g⁻¹·h⁻¹) | 681 | 629 | 760 | 1200 | 777 |
| | Esterification reaction speed (mmol·g⁻¹·min⁻¹) | 3.6 | 3.3 | 2.9 | 3.6 | 2.6 |

**Table 2**

| | Sample no. | Example 6 | Example 7 | Example 8 | Example 9 | Example 10 |
|---|---|---|---|---|---|---|
| Starting materials | Wood starting material powder amount (g) | 300 | 300 | 300 | 300 | 300 |
| | Binder type | B1 LDPE | B1 LDPE | B2 LDPE | B2 LDPE | B3 HDPE |
| | Binder form | Suspension | Suspension | Powder | Powder | Powder |
| | Binder amount (g) | 30 | 30 | 30 | 30 | 30 |
| | Weight ratio in wood starting material (wt%) | 91.0 | 91.0 | 91.0 | 91.0 | 91.0 |
| | Pellet size (mm) | 4.0 | 4.0 | 2.0 | 2.0 | 2.0 |
| Carbonization conditions | Firing temperature (°C) | 350 | 400 | 350 | 400 | 350 |
| | Firing time (h) | 1 | 1 | 1 | 1 | 1 |
| Carbide | Hardness (N) | 21.2 | 8.3 | 40 | 15.4 | 11.8 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 7.1 | 6.3 | 7.1 | 6.2 | 7.9 |
| | Sulfo group amount (mmol/g) | 2.2 | 2.0 | 2.2 | 1.9 | 2.5 |
| Catalyst evaluation | Hydrolysis reaction speed (µmol·g⁻¹·h⁻¹) | 997 | 637 | 1091 | 670 | 921 |
| | Esterification reaction speed (mmol·g⁻¹·min⁻¹) | 3.4 | 2.7 | 3.6 | 2.9 | 3.1 |

**Table 3**

| | Sample no. | Example 11 | Example 12 | Example 13 | Example 14 | Example 15 |
|---|---|---|---|---|---|---|
| Starting materials | Wood starting material powder amount (g) | 300 | 300 | 300 | 300 | 300 |
| | Binder type | B4 LMDPE | B5 LLDPE | B6 PP | B7 PVC | B8 ABS |
| | Binder form | Powder | Powder | Powder | Powder | Powder |
| | Binder amount (g) | 30 | 30 | 30 | 30 | 30 |
| | Weight ratio in wood starting material (wt%) | 91.0 | 91.0 | 91.0 | 91.0 | 91.0 |
| | Pellet size (mm) | 2.0 | 2.0 | 2.0 | 2.0 | 2.0 |
| Carbonization conditions | Firing temperature (°C) | 350 | 350 | 400 | 350 | 400 |
| | Firing time (h) | 1 | 1 | 1 | 1 | 1 |
| carbide | Hardness (N) | 10.0 | 5.7 | 5.4 | 19.3 | 5.8 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 8.1 | 6.6 | 5.5 | 8.2 | 5.9 |
| | Sulfo group amount (mmol/g) | 2.5 | 2.0 | 1.7 | 2.6 | 1.9 |
| Catalyst evaluation | Hydrolysis reaction speed (µmol·g⁻¹·h⁻¹) | 896 | 829 | 548 | 1113 | 631 |
| | Esterification reaction speed (mmol·g⁻¹·min⁻¹) | 3.3 | 2.4 | 2.4 | 3.0 | 2.5 |

**Table 4**

| | Sample no. | Example 16 | Example 17 | Example 18 | Example 19 | Example 20 |
|---|---|---|---|---|---|---|
| Starting materials | Wood starting material powder amount (g) | 300 | 300 | 300 | 300 | 300 |
| | Binder type | B9 PC | B10 PET | B11 UHMWPE | B11 UHMWPE | B11 UHMWPE |
| | Binder form | Powder | Powder | Powder | Powder | Powder |
| | Binder amount (g) | 30 | 30 | 3 | 30 | 3 |
| | Weight ratio in wood starting materials (wt%) | 91.0 | 91.0 | 99.0 | 91.0 | 99.0 |
| | Pellet size (mm) | 2.0 | 2.0 | 2.0 | 2.0 | 2.0 |
| Carbonization conditions | Firing temperature (°C) | 350 | 350 | 350 | 350 | 400 |
| | Firing time (h) | 1 | 1 | 1 | 1 | 1 |
| Carbide | Hardness (N) | 29.8 | 31.7 | 13.9 | 101.9 | 8.7 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 8.9 | 8.0 | 7.3 | 6.8 | 6.0 |
| | Sulfo group amount (mmol/g) | 2.8 | 2.5 | 2.3 | 2.1 | 1.9 |
| Catalyst evaluation | Hydrolysis reaction speed (µmol·g⁻¹·h⁻¹) | 1216 | 1046 | 1032 | 961 | 677 |
| | Esterification reaction speed (mmol·g⁻¹·min⁻¹) | 2.6 | 2.9 | 3.3 | 2.9 | 2.6 |

**Table 5**

| | Sample no. | Example 21 | Example 22 | Example 23 | Example 24 | Example 25 |
|---|---|---|---|---|---|---|
| Starting materials | Wood starting material powder amount (g) | 300 | 300 | 300 | 300 | 300 |
| | Binder type | B11 UHMWPE | B11 UHMWPE | B12 PI | B19 UR | B13 PHR |
| | Binder form | Powder | Powder | Powder | Powder | Granules |
| | Binder amount (g) | 30 | 30 | 30 | 30 | 30 |
| | Weight ratio in wood starting materials (wt%) | 91.0 | 91.0 | 91.0 | 91.0 | 91.0 |
| | Pellet size (mm) | 2.0 | 4.0 | 2.0 | 2.0 | 2.0 |
| Carbonization conditions | Firing temperature (°C) | 400 | 350 | 400 | 400 | 350 |
| | Firing time (h) | 1 | 1 | 1 | 1 | 1 |
| Carbide | Hardness (N) | 18.8 | 76.2 | 45.4 | 18.9 | 47.5 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 5.4 | 9.2 | 5.2 | 6.4 | 9.7 |
| | Sulfo group amount (mmol/g) | 1.7 | 2.9 | 1.6 | 2.0 | 3.0 |
| Catalyst evaluation | Hydrolysis reaction speed (µmol·g⁻¹·h⁻¹) | 669 | 1070 | 631 | 644 | 1070 |
| | Esterification reaction speed (mmol·g⁻¹·min⁻¹) | 2.7 | 3.3 | 2.3 | 2.1 | 2.8 |

**Table 6**

| | Sample no. | Example 26 | Example 27 | Example 28 | Example 29 | Example 30 |
|---|---|---|---|---|---|---|
| Starting materials | Wood starting material powder amount (g) | 300 | 300 | 300 | 300 | 300 |
| | Binder type | B13 PHR | B14 PHN | B15 PHR | B16 UF | B17 MR |
| | Binder form | Powder | Powder | Liquid | Powder | Powder |
| | Binder amount (g) | 120 | 30 | 30 | 30 | 30 |
| | Weight ratio in wood starting materials (wt%) | 71.4 | 91.0 | 91.0 | 91.0 | 91.0 |
| | Pellet size (mm) | 2.0 | 2.0 | 2.0 | 2.0 | 2.0 |
| Carbonization conditions | Firing temperature (°C) | 350 | 350 | 350 | 400 | 400 |
| | Firing time (h) | 1 | 1 | 1 | 1 | 1 |
| Carbide | Hardness (N) | 77.0 | 15.9 | 50.6 | 13.6 | 12.5 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 9.5 | 9.3 | 8.7 | 6.5 | 6.9 |
| | Sulfo group amount (mmol/g) | 3.0 | 2.9 | 2.7 | 2.0 | 2.2 |
| Catalyst evaluation | Hydrolysis reaction speed (µmol·g⁻¹·h⁻¹) | 1054 | 1203 | 1016 | 530 | 673 |
| | Esterification reaction speed (mmol·g⁻¹·min⁻¹) | 2.2 | 2.8 | 3.2 | 2.3 | 2.3 |

**Table 7**

| | Sample no. | Example 31 | Example 32 | Example 33 | Example 34 | Example 35 |
|---|---|---|---|---|---|---|
| Starting materials | Wood starting material powder amount (g) | 300 | 300 | 300 | 300 | 300 |
| | Binder type | B18 ER | B18 ER | B20 SR | B21 UR | B22 PI |
| | Binder form | Powder | Powder | Powder | Liquid | Powder |
| | Binder amount (g) | 30 | 120 | 30 | 30 | 30 |
| | Weight ratio in wood starting material (wt%) | 91.0 | 71.4 | 91.0 | 91.0 | 91.0 |
| | Pellet size (mm) | 2.0 | 2.0 | 2.0 | 2.0 | 2.0 |
| Carbonization conditions | Firing temperature (°C) | 400 | 400 | 400 | 350 | 400 |
| | Firing time (h) | 1 | 1 | 1 | 1 | 1 |
| Carbide | Hardness (N) | 11.2 | 45.5 | 11.2 | 16.9 | 52.5 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 7.1 | 9.2 | 6.0 | 7.7 | 7.5 |
| | Sulfo group amount (mmol/g) | 2.2 | 2.9 | 1.9 | 2.4 | 2.3 |
| Catalyst evaluation | Hydrolysis reaction speed (µmol·g⁻¹·h⁻¹) | 583 | 991 | 792 | 654 | 671 |
| | Esterification reaction speed (mmol·g⁻¹·min⁻¹) | 2.8 | 2.4 | 2.5 | 2.8 | 2.6 |

**Table 8**

| | Sample no. | Example 36 | Example 37 | Example 38 | Example 39 | Example 40 |
|---|---|---|---|---|---|---|
| Starting materials | Wood starting material powder amount (g) | 300 | 300 | 300 | 300 | 300 |
| | Binder type | B23 DAP | B11 UHMWPE | B13 PHR | B1 LDPE | B11 UHMWPE |
| | Binder form | Powder | Powder | Granules | Suspension | Powder |
| | Binder amount (g) | 30 | 30 | 30 | 30 | 30 |
| | Weight ratio in wood starting materials (wt%) | 91.0 | 91.0 | 91.0 | 91.0 | 91.0 |
| | Pellet size (mm) | 2.0 | 2.0 | 2.0 | 2.0 | 2.0 |
| Carbonizatio n conditions | Firing temperature (°C) | 350 | 350 | 350 | 400 | 350 |
| | Firing time (h) | 1 | 1 | 1 | 1 | 1 |
| Carbide | Hardness (N) | 31.8 | 78.4 | 38.0 | 11.2 | 30.0 |
| Sulfonating conditions | Sulfonating agent | Fuming sulfuric acid | Concentrated sulfuric acid | Concentrated sulfuric acid | Chlorosul fonic acid | Chlorosu lfonic acid |
| | Sulfur content (wt%) | 7.0 | 4.8 | 6.5 | 6.0 | 8.7 |
| | Sulfo group amount (mmol/g) | 2.2 | 1.5 | 2.0 | 1.9 | 2.7 |
| Catalyst evaluation | Hydrolysis reaction speed (µmol·g⁻¹·h⁻¹) | 844 | 613 | 665 | 593 | 914 |
| | Esterification reaction speed (mmol·g⁻¹·min⁻¹) | 2.7 | 2.6 | 2.3 | 3.4 | 3.4 |

**Table 9**

| | Sample no. | Example 41 | Control example | Comp. Ex. 1 | Comp. Ex. 2 | Comp. Ex. 3 |
|---|---|---|---|---|---|---|
| Starting materials | Wood starting material powder amount (g) | 300 | 300 | 300 | 300 | 300 |
| | Binder type | B13 PHR | - | B31 Viscose | B32 MC | B33 CMC |
| | Binder form | Granules | - | Liquid | Powder | Powder |
| | Binder amount (g) | 30 | - | 24 | 150 | 60 |
| | Weight ratio in wood starting materials (wt%) | 91.0 | 100.0 | 92.6 | 66.7 | 83.3 |
| | Pellet size (mm) | 2.0 | 2.0 | 2.0 | 2.0 | 2.0 |
| Carbonization conditions | Firing temperature (°C) | 350 | 350 | 400 | 400 | 400 |
| | Firing time (h) | 1 | 1 | 1 | 1 | 1 |
| Carbide | Hardness (N) | 55.0 | Not shapeable | 10 | 9.4 | 4.2 |
| Sulfonating conditions | Sulfonating agent | Chlorosulfonic acid | Fuming sulfuric acid | Fuming sulfuric acid | Fuming sulfuric acid | Fuming sulfuric acid |
| | Sulfur content (wt%) | 9.2 | 5.5 | 4.5 | 1.0 | 6.2 |
| | Sulfo group amount (mmol/g) | 2.9 | 1.7 | 1.4 | 0.3 | 1.9 |
| Catalyst evaluation | Hydrolysis reaction speed (µmol·g⁻¹·h⁻¹) | 896 | 783 | 534 | 183 | 758 |
| | Esterification reaction speed (mmol·g⁻¹·min⁻¹) | 3.4 | 2.6 | 2.0 | 1.2 | 4.2 |

**Table 10**

| | Sample no. | Comp. Ex. 4 | Comp. Ex. 5 | Comp. Ex. 6 | Comp. Ex. 7 | Comp. Ex. 8 |
|---|---|---|---|---|---|---|
| Starting materials | Wood starting material powder amount (g) (except Comp. Ex. 6) | 300 | 300 | 300 | 300 | Known product 300 |
| | Binder type | B32 MC | B33 CMC | B32 MC | B33 CMC | B1 LDPE |
| | Binder form | Powder | Powder | Powder | Powder | Dispersion, post kneading |
| | Binder amount (g) | 30 | 30 | 30 | 30 | 30 |
| | Weight ratio in wood starting materials (wt%) | 91.0 | 91.0 | 91.0 | 91.0 | 91.0 |
| | Pellet size (mm) | 2.0 | 2.0 | 2.0 | 2.0 | 2.0 |
| Carbonization conditions | Firing temperature (°C) | 350 | 350 | 400 | 400 | 400 |
| | Firing time (h) | 1 | 1 | 1 | 1 | 1 |
| Carbide | Hardness (N) | 1 or less | 1 or less | 1 or less | 1 or less | 5.9 |
| Sulfonating conditions | Sulfonating agent | Fuming sulfuric acid | Fuming sulfuric acid | Fuming sulfuric acid | Fuming sulfuric acid | Fuming sulfuric acid |
| | Sulfur content (wt%) | 6.9 | 7.0 | 1.9 | 5.9 | 4.5 |
| | Sulfo group amount (mmol/g) | 2.1 | 2.2 | 0.6 | 1.8 | 1.4 |
| Catalyst evaluation | Hydrolysis reaction speed (µmol·g⁻¹·h⁻¹) | 955 | 1072 | 74 | 675 | 57 |
| | Esterification reaction speed (mmol·g⁻¹·min⁻¹) | 3.3 | 3.8 | 1.0 | 2.6 | 1.3 |

### Results and Considerations

### Regarding Comparative Example 8

The shaped solid acids of the examples and comparative examples all exhibit catalytic action for a hydrolysis reaction and esterification reaction and have sufficient functions as solid acids having sulfo groups. Here, if focusing on Comparative Example 8, this is a solid acid corresponding to a conventional product where a preformed powder solid acid is given a synthetic resin binder and shaped. It has a suitable hardness. However, the drop in the catalytic reactivity is remarkable.

It may be concluded that the sulfo group parts exposed at the surface are covered by the later added resin and the amount of sulfo groups actually contributing to the reaction decreases. The control example is not shaped at all and remains in the powder form. No binder is added and the sulfo group parts are not covered, so it can be said that the catalytic activity becomes relatively good.

### Regarding Carbonization Conditions (Heating Temperature)

If studying the examples and comparative examples where the carbonization temperature is 400°C, both are provided with catalytic activity. However, examples using synthetic resin binders exhibit a high hardness as an overall trend. If studying examples and comparative examples where the carbonization temperature is 350°C, under these conditions as well, both are provided with catalytic activity. Furthermore, in many examples, the catalytic activity tends to be improved. If judging from a comparison of the catalytic activity and the carbonization temperatures 350°C and 400°C, it is believed that along with the rise of the carbonization temperature, the graphene sheet-like structures of the wood starting materials become greater and the amounts of functional groups substituted with the sulfo groups decrease. However, in the case of the low temperature side carbonization temperature, functional groups suitably remain at the surface of the carbonized material. It can be guessed that the sulfo groups are bonded there.

### Regarding Hardness

If the carbonization temperature of the carbonization conditions is 400°C, if comparing the examples (synthetic resin binder used) and the comparative examples (cellulose-based binder used), the comparative examples cannot retain their shapes unless increasing the amount of binder. If making the carbonization temperature 350°C, Comparative Examples 4 and 5 sharply drop in hardness making shape retention difficult in practice. The examples, while depending on the type of the resin, had hardness of 10 times or more the comparative examples. There are diverse types of resins of synthetic resin binders, so it is difficult to grasp the general behavior at the time of heating. Probably, the softening of the resin due to the rise in temperature at the time of carbonization and the formation of solid masses due to the entrainment of wood starting material powder are believed to be the main causes. The resins used for the resin of a synthetic resin binder differ in decomposition temperature, melting temperature, etc. for each resin. Therefore, the temperature for obtaining the optimal hardness is estimated for each resin. Note that, the relationship between the carbonization temperature and hardness at the time of use of a cellulose-based binder has not been clearly elucidated.

### Regarding Sulfonating Agent

The sulfonating agents used in the examples were fuming sulfuric acid, concentrated sulfuric acid, and chlorosulfonic acid. Regardless of the type of the sulfonating agent, in each case the sulfonating reaction proceeded and good catalytic activity was expressed. Therefore, selection of the sulfonating agent becomes easy.

### Regarding Synthetic Resin Binder

As disclosed in all examples, as the synthetic resin binder, both a thermoplastic resin and thermosetting resin exhibited hardness retention and catalytic activity. While there are differences in performance of catalytic activity for each type of resin, it was clarified that the synthetic resin binder for binding the wood starting material powder can be selected from an extremely broad range of resins. In particular, the catalytic activity performance of examples using polyethylene-based and phenol resin-based synthetic resin binders was remarkable. From this, it is possible to select the optimal synthetic resin binder considering overall the usage environment etc. of the solid acid.

### Summary of Carbonization Temperature and Starting Materials Used

The object of the present invention is good catalytic activity and retention of hardness for shape retention. In view of this point, the ideal carbonization temperature is a temperature sufficient for causing formation of graphene sheet-like structures of the wood starting material powder and enabling softening (thermoplastic resin) or hardening (thermosetting resin) of the added synthetic resin binder. Furthermore, it is necessary to make the temperature one of a range not causing formation of graphene sheet-like structure in the carbonized shapes. Accordingly, while differing depending on the type of the resin, 290 to 420°C, furthermore 300 to 400°C, more preferably 350 to 400°C can be defined.

From the results of the comparative examples, when dealing with the carbonization temperature exhibiting suitable catalytic activity and hardness, it was not possible to secure sufficient hardness with a cellulose-based binder. Therefore, the type of binder preferable for securing hardness in the region of carbonization temperature preferable for molding the wood starting material powder is a synthetic resin. Furthermore, the synthetic resin binder can be of any form such as a dispersion, powder (granules), or liquid. From this, a synthetic resin binder is effective for binding the wood starting material powder and convenient for maintaining a high catalytic activity. In particular, since it can be used in any form, the types of the resins handled can be expanded.

In addition, even if the weight ratio of the wood starting material powder in the wood starting material mixture forming the main body of the shaped solid acid is raised to 70 wt% to 99 wt%, good catalytic activity is exhibited and hardness essential for shape retention is given. For this reason, the maximum ratio of the wood starting material powder can be raised up to 99 wt%. Further, if making the wood starting material powder 99 wt% or less, the hardness rises by that amount. In this way, it is possible to flexibly adjust the amount of starting material to selectively produce the solid acid according to demand.

### Range of Amount of Sulfo Groups

Considered from the results of the catalytic reactions of the examples and comparative examples, the lower limit value is 0.5 mmol/g, more preferably 0.7 mmol/g. Furthermore, 1.5 mmol/g can be derived from the values satisfying all examples. The higher the upper limit value the better. However, due to restrictions due to the graphene sheet-like structures or surface functional groups of the carbonized shapes, the upper limit value of the amount of sulfo groups is believed to converge to about 5.0 mmol/g. Therefore, the range of the suitable amount of sulfo groups is 0.5 mmol/g or more, more specifically a range of 0.5 to 5.0 mmol/g.

### Industrial Applicability

The method of production of a synthetic resin binder-shaped solid acid of the present invention can produce a shaped solid acid formed into an aggregate overall by heating treatment of a powder form carbon source and a synthetic resin binder itself. In addition, an inexpensive wood starting material powder is used as the starting material. The amount of the wood starting material powder itself can also be easily increased. Therefore, the ease of handling of the solid acid as shapes is improved and the price can also be kept down. Further, the catalytic activity is higher than a conventional shaped solid acid. Further, the hardness required for shape retention is also sufficiently provided so the result is extremely handy. For this reason, this is extremely promising as an alternative to the conventional sulfuric acid, powder like solid acid, or shaped solid acid.

### Reference Signs List

M. wood starting material powder
B. synthetic resin binder
Bc. gel
11. wood starting material mixture
12. starting material shapes
13. carbonized shapes
14. shaped solid acid
SA. synthetic resin binder-shaped solid acid

## Claims

1. A method of production of a synthetic resin binder-shaped solid acid comprising
a starting material kneading step of kneading a wood starting material powder and a synthetic resin binder to obtain a wood starting material mixture, wherein said synthetic resin binder is a thermoplastic resin or a thermosetting resin,
a molding step of molding said wood starting material mixture into predetermined shapes to obtain starting material shapes,
a carbonization step of carbonizing said starting material shapes in an inert atmosphere to obtain carbonized shapes, and
a sulfonating step of introducing sulfo groups into said carbonized shapes to obtain a shaped solid acid.

2. The method of production of a synthetic resin binder-shaped solid acid according to claim 1 wherein said synthetic resin binder is a thermoplastic resin.

3. The method of production of a synthetic resin binder-shaped solid acid according to claim 2 wherein said thermoplastic resin is selected from a polyethylene resin, polypropylene resin, polyethylene terephthalate resin, polycarbonate resin, polyvinyl chloride resin, acrylonitrile-butadiene-styrene resin, polyimide resin, or polyurethane resin.

4. The method of production of a synthetic resin binder-shaped solid acid according to claim 1 wherein said synthetic resin binder is a thermosetting resin.

5. The method of production of a synthetic resin binder-shaped solid acid according to claim 4 wherein said thermosetting resin is selected from a phenol resin, urea resin, melamine resin, epoxy resin, silicone resin, polyimide resin, diallyl phthalate resin, or polyurethane resin.

6. The method of production of a synthetic resin binder-shaped solid acid according to claim 1 wherein said synthetic resin binder is a powder form or liquid form.

7. The method of production of a synthetic resin binder-shaped solid acid according to claim 1 wherein said synthetic resin binder is a dispersion form.

8. The method of production of a synthetic resin binder-shaped solid acid according to claim 1 wherein a weight ratio of wood starting material powder in said wood starting material mixture is a maximum 99 wt%.

9. The method of production of a synthetic resin binder-shaped solid acid according to claim 1 wherein an amount of said sulfo groups in said shaped solid acid is 0.5 mmol/g or more.

## Patentansprüche

1. Verfahren zur Herstellung einer mit synthetischem Bindemittelharz geformten festen Säure, umfassend
einen Ausgangsmaterialknetschritt des Knetens eines Holzausgangsmaterialpulvers und eines synthetischen Bindemittelharzes, um eine Holzausgangsmaterialmischung zu erhalten, wobei das synthetische Bindemittelharz ein thermoplastisches Harz oder ein wärmehärtbares Harz ist,
einen Formgebungsschritt des Formens der Holzausgangsmaterialmischung in vorbestimmte Formen, um Ausgangsmaterialformen zu erhalten,
einen Carbonisierungsschritt des Carbonisierens der Ausgangsmaterialformen in einer inerten Atmosphäre, um carbonisierte Formen zu erhalten, und
einen Sulfonierungsschritt des Einführens von Sulfogruppen in die carbonisierten Formen, um eine geformte feste Säure zu erhalten.

2. Verfahren zur Herstellung einer mit synthetischem Bindemittelharz geformten festen Säure nach Anspruch 1, wobei das synthetische Bindemittelharz ein thermoplastisches Harz ist.

3. Verfahren zur Herstellung einer mit synthetischem Bindemittelharz geformten festen Säure nach Anspruch 2, wobei das thermoplastische Harz ausgewählt ist aus einem Polyethylenharz, Polypropylenharz, Polyethylenterephthalatharz, Polycarbonatharz, Polyvinylchloridharz, Acrylnitril-Butadien-Styrolharz, Polyimidharz oder Polyurethanharz.

4. Verfahren zur Herstellung einer mit synthetischem Bindemittelharz geformten festen Säure nach Anspruch 1, wobei das synthetische Bindemittelharz ein wärmehärtbares Harz ist.

5. Verfahren zur Herstellung einer mit synthetischem Bindemittelharz geformten festen Säure nach Anspruch 4, wobei das wärmehärtbare Harz ausgewählt ist aus einem Phenolharz, Harnstoffharz, Melaminharz, Epoxyharz, Silikonharz, Polyimidharz, Diallylphthalatharz oder Polyurethanharz.

6. Verfahren zur Herstellung einer mit synthetischem Bindemittelharz geformten festen Säure nach Anspruch 1, wobei das synthetische Bindemittelharz in Pulverform oder flüssiger Form vorliegt.

7. Verfahren zur Herstellung einer mit synthetischem Bindemittelharz geformten festen Säure nach Anspruch 1, wobei das synthetische Bindemittelharz in Dispersionsform vorliegt.

8. Verfahren zur Herstellung einer mit synthetischem Bindemittelharz geformten festen Säure nach Anspruch 1, wobei das Gewichtsverhältnis von Holzausgangsmaterialpulver in der Holzausgangsmaterialmischung höchstens 99 Gew.-% beträgt.

9. Verfahren zur Herstellung einer mit synthetischem Bindemittelharz geformten festen Säure nach Anspruch 1, wobei eine Menge an Sulfogruppen in der geformten festen Säure 0,5 mmol/g oder mehr beträgt.

## Revendications

1. Procédé de production d'un acide solide mis en forme avec un liant de résine synthétique comprenant
une étape de malaxage de matière première consistant à malaxer une poudre de matière première de bois et un liant de résine synthétique pour que soit obtenu un mélange de matière première de bois, dans laquelle ledit liant de résine synthétique est une résine thermoplastique ou une résine thermodurcissable,
une étape de moulage consistant à mouler le mélange de matière première de bois sous des formes prédéterminées pour que soient obtenues des formes de matière première,
une étape de carbonisation consistant à carboniser lesdites formes de matière première dans une atmosphère inerte pour que soient obtenues des formes carbonisées, et
une étape de sulfonation consistant à introduire des groupes sulfo dans lesdites formes carbonisées pour que soit obtenu un acide solide mis en forme.

2. Procédé de production d'un acide solide mis en forme avec un liant de résine synthétique selon la revendication 1, dans lequel ledit liant de résine synthétique est une résine thermoplastique.

3. Procédé de production d'un acide solide mis en forme avec un liant de résine synthétique selon la revendication 2, dans lequel ladite résine thermoplastique est choisie parmi une résine de polyéthylène, une résine de polypropylène, une résine de poly(téréphtalate d'éthylène), une résine de polycarbonate, une résine de poly(chlorure de vinyle), une résine d'acrylonitrile-butadiène-styrène, une résine de polyimide, et une résine de polyuréthane.

4. Procédé de production d'un acide solide mis en forme avec un liant de résine synthétique selon la revendication 1, dans lequel ledit liant de résine synthétique est une résine thermodurcissable.

5. Procédé de production d'un acide solide mis en forme avec un liant de résine synthétique selon la revendication 4, dans lequel ladite résine thermodurcissable est choisie parmi une résine de phénol, une résine d'urée, une résine de mélamine, une résine époxy, une résine de silicone, une résine de polyimide, une résine de phtalate de diallyle, et une résine de polyuréthane.

6. Procédé de production d'un acide solide mis en forme avec un liant de résine synthétique selon la revendication 1, dans lequel ledit liant de résine synthétique est une forme pulvérulente ou une forme liquide.

7. Procédé de production d'un acide solide mis en forme avec un liant de résine synthétique selon la revendication 1, dans lequel ledit liant de résine synthétique est une forme en dispersion.

8. Procédé de production d'un acide solide mis en forme avec un liant de résine synthétique selon la revendication 1, dans lequel la proportion en poids de la poudre de matière première de bois dans ledit mélange de matière première de bois est au maximum de 99 % en poids.

9. Procédé de production d'un acide solide mis en forme avec un liant de résine synthétique selon la revendication 1, dans lequel la quantité desdits groupes sulfo dans ledit acide solide mis en forme est de 0,05 mmol/g ou plus.
